# EUROPÄISCHE PATENTSCHRIFT

(11) **EP 2 841 900 B1**
(45) Veröffentlichungstag und Bekanntmachung des Hinweises auf die Patenterteilung: **22.02.2017**
(21) Anmeldenummer: 13706027.3
(22) Anmeldetag: 27.02.2013
(51) Int. Cl.: G01L 19/14, G01D 11/24

(54) **VERFAHREN ZUR HERSTELLUNG EINER SENSORANORDNUNG ZUR ERFASSUNG WENIGSTENS EINER EIGENSCHAFT EINES FLUIDEN MEDIUMS**
METHOD OF MANUFACTURING A SENSOR ASSEMBLY FOR DETECTING AT LEAST ONE PROPERTY OF A FLUID MEDIUM
PROCÉDÉ DE FABRICATION D'UN ENSEMBLE CAPTEUR DESTINÉ À LA DÉTECTION D'AU MOINS UNE PROPRIÉTÉ D'UN MILIEU FLUIDE

(30) Priorität: 27.04.2012 DE 102012207066
(43) Veröffentlichungstag der Anmeldung: 04.03.2015
(73) Patentinhaber: Robert Bosch GmbH, 70442 Stuttgart (DE)
(72) Erfinder: SPEIDEL, Claudia, 70439 Stuttgart (DE); BRAUER, Ingo, 71665 Vaihingen (DE); RUETH, Falk, 70771 Leinfelden-Echterdingen (DE)
(86) Internationale Anmeldenummer: PCT/EP2013/053866
(87) Internationale Veröffentlichungsnummer: WO 2013/159962

(56) Entgegenhaltungen:
- EP-A2- 0 994 250
- DE-A1-102009 054 689
- DE-T2- 69 815 801

## Beschreibung

### Stand der Technik

Die Erfindung betrifft ein Verfahren zur Herstellung einer Sensoranordnung zur Erfassung wenigstens einer Eigenschaft eines fluiden Mediums mit den Merkmalen des Oberbegriffs des unabhängigen Anspruchs.

Ein derartiges Verfahren ist beispielsweise aus der EP 0 994 250 A2 bekannt.

Die Erfassung der physikalischen Eigenschaften fluider Medien, also Gase und/oder Flüssigkeiten, ist in vielen Bereichen der Technik wesentlich, um beispielsweise die Leistung und/oder den Verbrauch von Maschinen zu optimieren. Bei den zu erfassenden Eigenschaften der fluiden Medien kann es sich beispielsweise um Parameter wie Druck, Temperatur, Strömungseigenschaften und dergleichen handeln. Aus der Technik sind Anwendungen bekannt, in denen die Eigenschaften der fluiden Medien bei sehr hohen Drücken von über 2000bar erfasst werden müssen. Ein wichtiges Anwendungsbeispiel, auf das die vorliegende Erfindung jedoch nicht beschränkt ist, ist die Erfassung des Kraftstoffdrucks in Hochdruckspeichereinspritzsystemen (Common-Rail-Systemen) durch sogenannte Raildrucksensoren (RDS). Diese werden in der Regel axial oder radial in das Verteilerrohr eingeschraubt und messen den dort anliegenden Druck des Kraftstoffs. Für eine optimierte Funktion des Common-Rail-Systems ist es wünschenswert, den Kraftstoff unter höchstmöglichen Druck zu setzen. Der maximale Druck wird jedoch nicht zuletzt durch die Druckbeständigkeit der Sensoranordnung des RDS in einem solchen Common-Rail-System beschränkt.

Druckbeständigkeit bedeutet hierbei, dass die Sensoranordnung über ihren typischen Einsatzzeitraum druckfest, insbesondere aber dicht gegen das unter einem hohen Druck anliegende Fluid ist. Unter höherer Druckbeständigkeit wird hierbei insbesondere die dauerhafte Beständigkeit gegen höhere Drücke verstanden.

Im Allgemeinen weisen derartige Sensoranordnungen in der Regel unter anderem ein auf einen Sensorträger aufgebrachtes Sensorelement mit einer Messbrücke auf, wobei der Druck üblicherweise durch einen als Zuführungskanal wirkenden, im Inneren der Sensoranordnung liegenden Kanal auf das Sensorelement beaufschlagt wird. Bei der Herstellung solcher Sensoranordnungen, insbesondere beim RDS, wird üblicherweise der das Sensorelement aufweisende Sensorträger auf ein Stutzenteil aufgeschweißt, um die beiden Gehäuseteile dauerhaft miteinander zu verbinden. In der Regel weist das Stutzenteil dabei an seiner Außenseite ein Verbindungselement, beispielsweise ein oder mehrere Gewinde auf, mit dem die Sensoranordnung in einer Applikation festgelegt werden kann. Einteilig ausgeführte Drucksensoranordnungen sind auch denkbar, weisen jedoch gegenüber den mehrteiligen, verschweißten Varianten größere Toleranzen auf.

Die Schweißprozessführung und die Konstruktion der Fügeflächen des durch den Schweißprozess fest zusammengefügten Sensorträgers und des Stutzenteils sind dabei die Schlüsselelemente, um die Anforderungen an die Drucksensoranordnung zu erfüllen. Diese sind insbesondere, dass nach dem Schweißvorgang kein Teil des erstarrten Schweißbades in den Zuführungskanal hineinragt, sowie dass die Sensoranordnung eine dauerhafte Beständigkeit gegen sehr hohe Drücke oberhalb von 2000bar aufweist. Dabei stellt es eine große Herausforderung dar, beide Anforderungen gleichzeitig und kostengünstig zu erfüllen.

Für die Anwendung solcher Sensoranordnungen ist es von großem Vorteil, zu verhindern, dass während des Verschweißens Material in den Zuführungskanal im Stutzenteil und/oder in den Sensorträger hineingelangen kann, da solches Material, beispielsweise in Form von Schweißperlen vorliegend, sich im Betriebszustand zu einem späteren Zeitpunkt ablösen und dadurch Schäden im Common-Rail-System verursachen kann. Aus Geometriegründen ist es üblich, den Schweißvorgang von außen nach innen zu führen. Um zu vermeiden, dass während des Schweißvorgangs die Schmelze des Schweißbades in den Zuführungskanal gelangen kann, wird gewöhnlich im Fügebereich des Stutzenteils oder des Sensorträgers, in welchem die Schweißverbindung als Schweißnaht anschließend vorliegt, eine Schweißbadsicherung vorgesehen, wie dies in der DE 10 2009 054 689 A1 beschrieben ist.

Durch die Einschränkung, dass kein Material des Schmelzbades in den Zuführungskanal gelangen darf, kann die Verschweißung nicht über die Schweißbadsicherung hinausgeführt werden. In Folge dessen bleibt an der Wandung des Zuführungskanals im Bereich der Fügestelle zwischen dem Stutzenteil und dem Sensorträger eine Kerbe bestehen. Die Kerbe könnte die Stabilität der Schweißverbindung und damit der Drucksensoranordnung durch die von ihr bewirkte Kerbwirkung herabsetzen.

In der DE 10 2009 054 689 A1 wird deshalb eine optimierte Beständigkeit gegen hohe Drücke durch einen aufwändigen Zusatzprozessschritt erzielt. Dies erhöht jedoch die Herstellkosten.

### Offenbarung der Erfindung

### Vorteile der Erfindung

Gegenüber dem Stand der Technik weist das Verfahren mit den Merkmalen des unabhängigen Verfahrensanspruchs den Vorteil auf, dass die hergestellte Sensoranordnung eine höhere Druckbeständigkeit, insbesondere Dichtheit gegen das Fluid, aufweist, insbesondere bei Drücken über 2000bar. Dies wird erfindungsgemäß erreicht, indem nach dem Aufsetzen des Sensorträgers auf das Stutzenteil ein an den Zuführungskanal angrenzender erster Flächenabschnitt der ersten Fläche des Stutzenteils von einem an den Zuführungskanal angrenzenden zweiten Flächenabschnitt der zweiten Fläche des Sensorträgers derart beabstandet ist, dass zwischen dem ersten Flächenabschnitt und dem zweiten Flächenabschnitt eine an den Zuführungskanal angrenzende und den Zuführungskanal wenigstens teilweise umlaufende Aufnahmezone ausgebildet ist, die in einer radial nach innen zum Zuführungskanal hin verlaufenden Richtung durch einen Kragen begrenzt wird, wobei die Aufnahmezone zur Aufnahme von Schweißmaterial vorgesehen ist, welches sich bei dem Verfahrenschritt des Verbindens mittels der umlaufenden Schweißnaht bildet. Vorteilhaft ist vorgesehen, dass das Stutzenteil vor dem Schritt des Verbindens mittels der Schweißnaht an der ersten Fläche einen ersten kreisringförmigen Flächenabschnitt aufweist, an dessen in Richtung des Durchgangskanals liegenden radialen Ende ein von dem ersten kreisringförmigen Flächenabschnitt vorspringender und den Durchgangskanal umlaufender Kragen mit einem ersten Kegelflächenabschnitt angeordnet ist, wobei in den ersten Kegelflächenabschnitt eine umlaufende Ausnehmung eingebracht ist. Ein besonderer Vorteil einer solchen Ausführungsform der Erfindung besteht darin, dass der Kragen mit dem ersten Kegelflächenabschnitt eine beim Schweißprozess der Gravitationsrichtung entgegengesetzte besonders wirkungsvolle Schweißbadsicherung darstellt. Das während des Schweißprozesses flüssige Schweißbad wird durch die dargelegte Ausführungsform daran gehindert, der Schwerkraft folgend, in den Durchgangskanal zu fließen, da der erfindungsgemäß ausgebildete Kragen mit dem ersten Kegelflächenabschnitt das Schweißbad zusätzlich zu der als Ausnehmung ausgebildeten Aufnahmezone eindämmt.

Auf diese Weise wird ein Durchschweißen der Wandungen des Sensorträgers und des Stutzenteils zur Erzielung einer Beständigkeit der Sensoranordnung gegen Drücke größer als 2000bar verzichtbar, da die bei Druckbeaufschlagung auf die Sensoranordnung auftretenden Spannungen in der Schweißverbindung reduziert werden. Weiterhin wird vorteilhaft eine Spannungsüberhöhung an der Schweißwurzel und eine damit bei hohen Drücken mögliche Initialrissbildung wird reduziert, was die Druckbeständigkeit der Schweißverbindung der Sensoranordnung erhöht.

Das erfindungsgemäße Verfahren gewährleistet zudem insbesondere vorteilhaft, dass nach der Herstellung kein Schweißmaterial im gemeinsamen Zuführungskanal, beispielsweise in Form von Schweißperlen vorhanden ist. Diese könnten sich im Laufe der Zeit ablösen und anschließend Teile der Vorrichtung schädigen, an die die Sensoranordnung festgelegt ist. So könnten beispielsweise losgelöste Schweißperlen Piezoinjektoren eines Common-Rail-Systems beschädigen.

Weiterhin ermöglicht das erfindungsgemäße Verfahren, die Trennung von Sensorträger und Stutzenteil beizubehalten. Dies bewirkt neben Vorteilen bei den Herstellkosten, dass Sensorträger und Stutzenteil aus unterschiedlichen, für die Bauteile optimierten Materialien angefertigt werden können.

Dadurch, dass sich beim Verbinden mittels der Schweißnaht eine Schweißwurzel der Schweißnaht am Boden der Aufnahmezone ausbildet wird vorteilhaft erreicht, dass die durch das Schweißen in die Schweißnaht eingebrachte Spannung reduziert wird, indem die Vorbelastung der Schweißnaht durch Eigenspannungen vermindert wird. Die Form der Schweißwurzel in der Aufnahmezone kann darüber hinaus vorteilhaft bewirken, Spannungsspitzen, die in der Kerbe auf die Schweißwurzel der Schweißnaht einwirken, besser in der Schweißnaht zu verteilen, was die Druckbeständigkeit der Sensoranordnung vorteilhaft erhöht.

Eine besonders vorteilhafte Ausführungsform der Erfindung erhält man dadurch, dass die Projektion des oben erwähnten ersten Kegelflächenabschnitts in einer Richtung parallel zur axialen Richtung auf eine senkrecht zu der axialen Richtung verlaufende Ebene eine erste Projektionsringfläche bildet und dass die Projektion der in den ersten Kegelflächenabschnitt eingebrachten Ausnehmung parallel zur axialen Richtung auf die gleiche senkrecht zu der axialen Richtung verlaufende Ebene eine zweite Projektionsringfläche bildet, wobei das Verhältnis der radialen Breite B2 der zweiten Projektionsringfläche zu der radialen Breite B1 der ersten Projektionsringfläche größer als 0,25 und vorzugsweise größer als 0,5 ist. Eine Ausführungsform mit einem Verhältnis der radialen Breiten B2/B1 von größer als 0,25, bevorzugt von größer als 0,5 bewirkt, dass die Aufnahmezone eine Größe aufweist, die eine besonders vorteilhafte Wärmesenke darstellt, in die das Schweißbad während des Schweißprozesses hineingezogen wird und gleichzeitig ausreichend Raum bietet, um zum Erstarren der Schweißwurzel in der Aufnahmezone zu führen. Ein weiterer Vorteil dieser Weiterbildung der Erfindung besteht darin, dass die Herstellung der beschriebenen Ausnehmungen am Stutzenteil mit dem beschriebenen Verhältnis der radialen Breiten B2/B1 besonders einfach und mit geringen Toleranzen behaftet ist.

Eine Weiterbildung der Erfindung erhält man dadurch, dass das Stutzenteil vor dem Schritt des Verbindens mittels der Schweißnaht an der ersten Fläche einen ersten kreisringförmigen Flächenabschnitt aufweist, an dessen in Richtung des Durchgangskanals liegenden radialen Ende ein von dem ersten kreisringförmigen Flächenabschnitt vorspringender und den Durchgangskanal umlaufender Kragen mit einem ersten Kegelflächenabschnitt angeordnet ist und dass der Sensorträger vor dem Schritt des Verbindens mittels der Schweißnaht an der zweiten Fläche einen zweiten kreisringförmigen Flächenabschnitt aufweist, an dessen in Richtung des sacklochartigen Kanals liegenden radialen Ende eine Fase mit einem den sacklochartigen Kanal umlaufenden zweiten Kegelflächenabschnitt vorgesehen ist. Ein besonderer Vorteil dieser Weiterbildung liegt darin, dass sich beim Zusammenfügen des Sensorträgers und des Stutzenteils beide Teile durch die Formgebung des Kragens des Stutzenteils und der Formgebung der Fase des Sensorträgers automatisch so zueinander anordnen lassen, dass der Durchgangskanal des Stutzenteils mit dem sacklochartigen Kanal des Sensorträgers in axialer Richtung fluchtet und beide Kanäle zueinander zentriert sind. Dadurch wird insbesondere vorteilhaft eine gleichmäßige Ausführung der Schweißverbindung erzielt.

Dadurch, dass bei dem Schritt des Aufsetzens des Sensorträgers auf das Stutzenteil der oben erwähnte erste kreisringförmige Flächenabschnitt des Stutzenteils an dem oben erwähnten zweiten kreisringförmigen Flächenabschnitt des Sensorträgers flächig zur Anlage gelangt und der oben erwähnte erste Kegelflächenabschnitt des Stutzenteils an dem oben erwähnten zweiten Kegelflächenabschnitt des Sensorträgers flächig zur Anlage gelangt, wobei zwischen der Grundfläche der in den ersten Kegelflächenabschnitt eingebrachten Ausnehmung und dem zweiten Kegelflächenabschnitt des Sensorträgers ein Abstand gegeben ist, durch den die Aufnahmezone gebildet wird, wird besonders vorteilhaft erreicht, dass sich beim Zusammenfügen des Sensorträgers und des Stutzenteils beide Teile durch die besondere Formgebung der Erfindung automatisch so anordnen, dass die beiden Kanäle fluchten und sich die beiden Teile zueinander zentrieren und dass weiterhin die Schweißverbindung besonders einfach über eine große Fläche zwischen den beiden Bauteilen gleichmäßig ausgebildet wird, nämlich vorteilhaft in dem Bereich, in dem die beiden Bauteile flächig miteinander in Anlage kommen. Dadurch lässt sich mit einer einfachen Prozessführung vorteilhaft eine höher druckstabile Schweißverbindung erzielen.

Gleichzeitig wird durch die Formgebung eine besonders vorteilhafte Schweißbadsicherung bewirkt, die das Eindringen von Schweißmaterial in den Zuführungskanal vorteilhaft unterbindet. Dadurch wird vorteilhaft eine Erhöhung der Druckbeständigkeit bewirkt.

Eine Weiterbildung der Erfindung bei der durch das Verschweißen des ersten kreisringförmigen Flächenabschnitts mit dem zweiten kreisringförmigen Flächenabschnitt eine Schweißmaterial enthaltende Schweißnaht gebildet wird, wobei das Schweißmaterial der Schweißnaht zwischen dem ersten Kegelflächenabschnitt des Stutzenteils und dem zweiten Kegelflächenabschnitt des Sensorträgers maximal bis in die Aufnahmezone vordringt und dort eine Schweißwurzel ausbildet, hat den weiteren Vorteil, dass die Schweißverbindung besonders gleichmäßig ausgeführt wird und durch die in Anlage gelangende große Fläche besonders stabil ist. Vorteilhaft ist weiterhin, dass kein Schweißmaterial in den gemeinsamen Kanal gelangt.

Dadurch, dass die in dem ersten Kegelflächenabschnitt eingebrachte umlaufende Ausnehmung einen L-förmigen, U-förmigen oder C-förmigen Querschnitt aufweist werden auf die Wahl des Schweißverfahrens und der Materialien der beteiligten Schweißpartner besonders optimierte Geometrien der Aufnahmezone ausgebildet.

### Kurze Beschreibung der Zeichnungen

Ausführungsbeispiele der Erfindung sind in den Zeichnungen dargestellt und werden in der nachfolgenden Beschreibung näher erläutert.

Es zeigen:
**Fig. 1** eine Explosionsdarstellung eines bekannten Raildrucksensors;
**Fig. 2a** eine Explosionsdarstellung des Querschnitts einer Sensoranordnung vor dem Verschweißen;
**Fig. 2b** einen Querschnitt eines Teils einer Sensoranordnung nach dem Verschweißen;
**Fig. 3a** eine Detailansicht der Schweißverbindung aus der **Fig. 2b**;
**Fig. 3b** einen Querschnitt eines Ausführungsbeispiels des Stutzenteils der Erfindung;
**Fig. 3c** einen Querschnitt eines weiteren Ausführungsbeispiels des Stutzenteils der Erfindung.

### Ausführungsformen der Erfindung

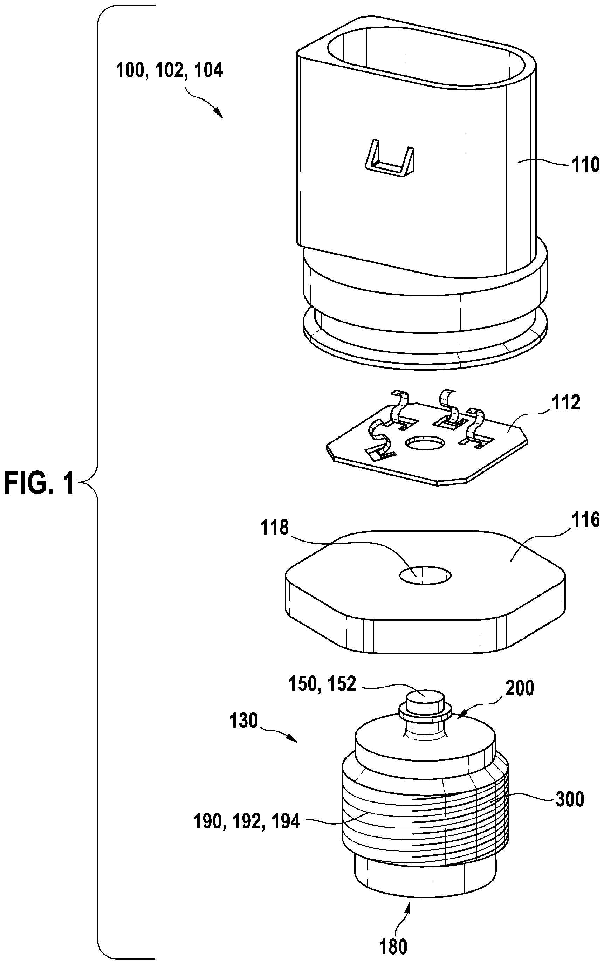

In **Fig. 1** ist eine bekannte Vorrichtung **(100)** zur Erfassung mindestens einer Eigenschaft eines fluiden Mediums gezeigt, welcher in diesem Fall als Drucksensor **(102),** speziell als Raildrucksensor **(104),** ausgebildet ist. Raildrucksensoren **(104)** messen im Verteilerrohr (Rail) einer Kraftstoffeinspritzanlage den Kraftstoffdruck. Ein Raildrucksensor **(104)** wird hierzu in das Rail oder eine Wand des Rails entweder axial oder radial eingeschraubt.

Der Drucksensor **(102)** in **Fig. 1** umfasst ein Steckergehäuse **(110)** sowie einen oder mehrere Schaltungsträger **(112),** beispielsweise eine oder mehrere Leiterplatten. Weiterhin umfasst der Raildrucksensor **(104)** ein Gehäuseunterteil **(116)** sowie eine Sensoranordnung **(130)** mit einem Stutzenteil **(300)** und einem an einem Sensorträger **(200)** angeordnetes Sensorelement **(150).** Das Sensorelement **(150)** umfasst eine Messbrücke **(152).** Der Sensorträger **(200)** ragt mit dem darauf angeordneten Sensorelement **(150)** in eine zentrale Bohrung **(118)** in dem Gehäuseunterteil **(116)** hinein, was jedoch nicht notwendigerweise der Fall sein muss. Das Stutzenteil **(300)** weist ferner auf seiner Außenseite ein Verbindungselement **(190),** beispielsweise eines oder mehrere Gewinde **(192),** besonders bevorzugt ein in die Außenseite integriertes Gewinde **(194)** auf, mittels welchem die Sensoranordnung **(130)** in ein Bauteil eingeschraubt werden kann, in dem der Druck bestimmt werden soll. In diesem Fall tritt das Bauteil über eine Anschlussöffnung **(180)** in Druckwirkkontakt mit dem Sensorelement **(150),** welches daraufhin ein dem Druck entsprechendes Signal erzeugt.

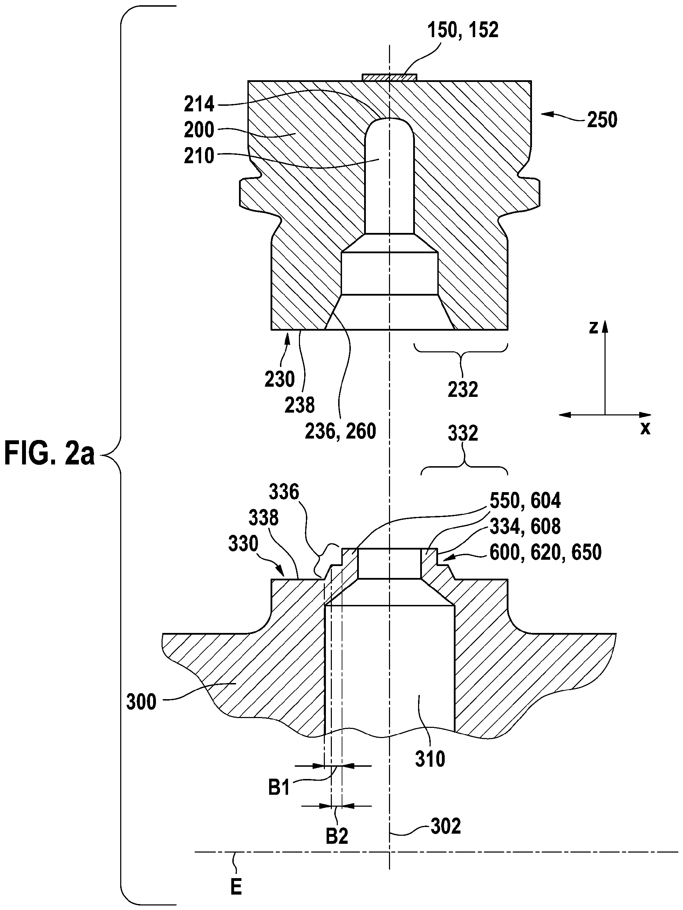

**Fig. 2a** zeigt in einem Ausführungsbeispiel eine Explosionsdarstellung des Querschnitts eines Teils einer Sensoranordnung **(130)** vor dem Verschweißen. Eine derartige Sensoranordnung kann bei der in **Fig. 1** dargestellten Vorrichtung verwandt werden. Die Sensoranordnung **(130)** besteht hierbei beispielsweise aus einem metallischen Sensorträger **(200)** und einem metallischen Stutzenteil **(300).** Der Sensorträger **(200)** weist einen sacklochartigen Kanal **(210)** und das Stutzenteil **(300)** einen Durchgangskanal **(310)** auf. Der Sensorträger **(200)** ist derart zu dem Stutzenteil **(300)** angeordnet, dass der sacklochartige Kanal **(210)** und der Durchgangskanal **(310)** koaxial zueinander angeordnet sind und in der Achse **(302)** der Sensoranordnung **(130)** fluchten. Der sacklochartige Kanal **(210)** ist dabei lediglich in Richtung des Durchgangskanals **(310)** geöffnet.

Im dargestellten Ausführungsbeispiel weisen die Kanäle **(210, 310)** im Wesentlichen einen kreisrunden Querschnitt auf. Entlang der axialen Richtung **(z)** des Durchgangskanals **(310)** sind unterschiedliche Durchmesser vorgesehen. Andere Ausführungsformen, die hier nicht dargestellt sind, können entlang der axialen Richtung des Durchgangskanals und/oder des sacklochartigen Kanals durchgehend denselben Durchmesser aufweisen

Mit axialer Richtung **(z)** wird dabei eine Richtung bezeichnet, die parallel zu der Achse **(302)** der Sensoranordnung verläuft und welche, wie in **Fig. 1** erkennbar ist, mit der Montagerichtung des Sensors zusammenfällt. Eine radiale Richtung **(x)** ist so definiert, dass sie senkrecht zu der axialen Richtung verläuft, d.h., eine radiale Richtung verläuft senkrecht zu der Achse **(302)** der Sensoranordnung.

Auf dem Sensorträgers **(200)** ist wenigstens ein Sensorelement **(150)** angeordnet. Im dargestellten Ausführungsbeispiel handelt es sich vorzugsweise um einen Drucksensor. Der Drucksensor basiert beispielsweise auf einem Dünnschicht-Druckmesskonzept mit einer Messbrücke **(152)** und ist dem Ausnehmungsgrund **(214)** des sacklochartigen Kanals **(210)** gegenüberliegend an der Außenseite **(250)** des Sensorträgers **(200)** angeordnet. Die Messbrücke **(152)** kann dabei durch piezoresistive oder sonstige elektronische Elemente ausgebildet sein.

Das Stutzenteil **(300)** weist eine dem Sensorträger **(200)** zugewandte erste Seite **(330)** und eine erste Fläche **(332)** auf und der Sensorträger **(200)** eine dem Stutzenteil **(300)** zugewandte zweite Seite **(230)** und eine zweite Fläche **(232).**

Im dargestellten Ausführungsbeispiel weist das Stutzenteil **(300)** an der ersten Fläche **(332)** einen ersten kreisringförmigen Flächenabschnitt **(338)** auf, an dessen in Richtung des Durchgangskanals **(310)** liegenden radialen Ende ein von dem ersten kreisringförmigen Flächenabschnitt **(338)** vorspringender und den Durchgangskanal **(310)** umlaufender Kragen **(604)** mit einem ersten Kegelflächenabschnitt **(336)** angeordnet ist. Der Kragen **(604)** dient dabei als eine Schweißbadsicherung **(550),** die beim Schweißprozess nach dem Zusammenfügen des Sensorträgers **(200)** mit dem Stutzenteil **(300)** bewirkt, dass das Schweißbad nicht in den Durchgangskanal **(310)** und/oder den sacklochartigen Kanal **(210)** fließt. In dem vorliegenden Beispiel ist die Schweißbadsicherung **(550)** am Stutzenteil **(300)** festgelegt und ragt in den Durchgangskanal **(310)** hinein. Sie könnte jedoch ebenso gut zusätzlich oder alternativ am Sensorträger **(200)** festgelegt sein und in den sacklochartigen Kanal **(210)** des Sensorträgers **(200)** hineinragen. In den ersten Kegelflächenabschnitt **(336)** ist weiterhin eine umlaufende Ausnehmung **(620)** eingebracht, die als Aufnahmezone **(600)** für Schweißmaterial dient und hier als L-förmiger **(650)** Querschnitt ausgeführt ist. Die umlaufende Ausnehmung kann jedoch auch eine andere Querschnittsform aufweisen, beispielsweise einen C-förmigen, U-förmigen oder V-förmigen Querschnitt. Durch die Formgebung lässt sich die Bodenform der nach dem Verschweißen gebildeten Schweißwurzel je nach den gewählten Materialien des Sensorträgers **(200)** und des Stutzenteils **(300)** und dem gewählten Schweißverfahren beeinflussen. Ein erster Flächenabschnitt **(334)** des Stutzenteils **(300)** bildet hierbei eine der Aufnahmezone **(600)** zugewandte Innenwandfläche **(608)** des Kragens **(604)** aus.

Im dargestellten Ausführungsbeispiel weist der Sensorträger **(200)** an einer zweiten Fläche **(232)** einen zweiten kreisringförmigen Flächenabschnitt **(238)** auf, an dessen in Richtung des sacklochartigen Kanals **(210)** liegenden radialen Ende eine Fase **(260)** mit einem den sacklochartigen Kanal **(210)** umlaufenden zweiten Kegelflächenabschnitt **(236)** angeordnet ist.

Um ein Maß für die Länge der Ausnehmung **(620)** in dem ersten Kegelflächenabschnitt **(336)** im Verhältnis zur gesamten Länge des ersten Kegelflächenabschnitts **(336)** zu erhalten wird die Projektion des ersten Kegelflächenabschnitts **(336)** in einer Richtung parallel zur axialen Richtung **(z)** auf eine senkrecht zu der axialen Richtung **(x)** verlaufende, gedachte Ebene **(E)** gebildet, was eine erste Projektionsringfläche mit einer ersten radialen Breite **(B1)** ergibt. Weiterhin wird die Projektion der in den ersten Kegelflächenabschnitt **(336)** eingebrachten Ausnehmung **(620)** parallel zur axialen Richtung **(z)** auf die gleiche senkrecht zu der axialen Richtung **(z)** verlaufende Ebene **(E)** gebildet, was eine zweite Projektionsringfläche mit einer zweiten radialen Breite **(B2)** ergibt. Somit ergibt das Verhältnis der zweiten radialen Breite **(B2)** der zweiten Projektionsringfläche zu der ersten radialen Breite **(B1)** der ersten Projektionsringfläche ein gewünschtes Maß für das Verhältnis der Länge der Ausnehmung **(620)** zur gesamten Länge des ersten Kegelflächenabschnitts **(336).**

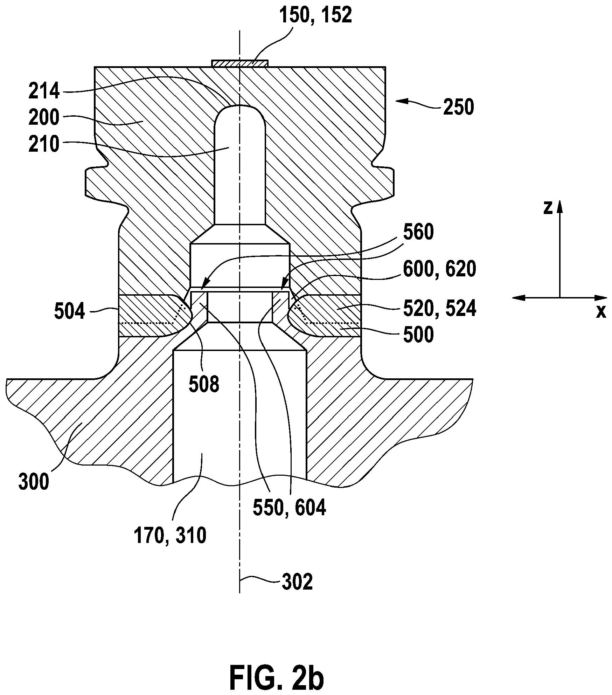

In **Fig. 2b** ist ein Querschnitt eines Teils einer Sensoranordnung nach dem Verschweißen dargestellt, wie er sich durch das Zusammensetzen des Sensorträgers **(200)** und des Stutzenteils **(300)** aus **Fig. 2a** und die Ausbildung einer Schweißverbindung **(500)** ergibt. Der Durchgangskanal **(310)** und der sacklochartige Kanal **(210)** bilden nach dem Zusammensetzen einen gemeinsamen Zuführungskanal **(170)** zum Sensorelement **(150)** aus, dessen Achse in axialer Richtung **(z)** parallel zur Achse **(302)** der Sensoranordnung **(130)** verläuft und der im Ausnehmungsgrund **(214)** des Sensorträgers endet. Der Schweißprozess wird dabei aus geometrischen Gründen von der Außenseite **(250)** des Sensorträgers nach innen zum Zuführungskanal **(170)** hin gerichtet geführt. Die Schweißverbindung **(500)** dient dazu, den Sensorträger **(200)** mit dem Stutzenteil **(300)** dauerhaft und druckfest zu verbinden. Dabei soll die Sensoranordnung **(130)** grundsätzlich für Drücke größer als 2000bar und insbesondere auch größer als 2400bar geeignet sein. Die Schweißverbindung **(500)** beziehungsweise die gesamte Sensoranordnung **(130)** wird also für einen derartigen Druck ausgelegt. Die Schweißverbindung **(500)** liegt dabei derart vor, dass sie die Schweißbadsicherung **(550),** welche durch den in Form des in den Zuführungskanal **(170)** vorspringenden Kragens **(604)** gebildet ist, erfasst.

Während des Schweißprozesses bildet sich im Bereich der Schweißverbindung **(520)** ein Schweißmaterial **(524)** enthaltendes Schweißbad **(520)** aus, das sich aus den Materialien des Sensorträgers **(200)** und des Stutzenteils **(300),** sowie gegebenenfalls zugesetzten Schweißzusätzen ergibt. Die Schweißbadsicherung **(550)** in Form des in den Zuführungskanal **(170)** vorspringenden Kragens **(604)** verhindert dabei, dass das Schweißbad **(520)** in den Zuführungskanal fließen kann. Nach dem Ende des Schweißprozesses erstarrt das Schweißbad **(520)** und verbindet den Sensorträger **(200)** mit dem Stutzenteil **(300)** mittels der als Schweißnaht **(504)** bezeichneten Schweißverbindung **(500)** zur Sensoranordnung **(130).** Das in radialer Richtung zum Zuführungskanal **(170)** weisende Ende der Schweißnaht **(504)** wird dabei als Schweißwurzel **(508)** bezeichnet. Das Schweißbad dringt während des Schweißprozesses in die an den Zuführungskanal **(170)** angrenzende und wenigstens teilweise den Zuführungskanal **(170)** umlaufende Aufnahmezone **(600)** für Schweißmaterial **(524)** ein und erstarrt dort aufgrund der Wärmesenke, welche durch die den Zuführungskanal **(170)** umlaufende Ausnehmung **(620)** gebildet wird. Die nicht verschweißten Flächenanteile der dem Sensorträger **(200)** zugewandten ersten Seite **(330)** des Stutzenteils **(300)** und der dem Stutzenteil **(300)** zugewandten zweiten Seite **(230)** des Sensorträgers bilden dabei eine Kerbe **(560)** aus.

Da die Schweißwurzel **(508)** in der den Zuführungskanal **(170)** wenigstens teilweise umlaufenden Ausnehmung **(620)** zudem weniger steif angebunden ist als in einer dem Stand der Technik entsprechenden Anordnung ohne Ausnehmung **(620),** reduzieren sich zudem vorteilhaft die durch den Schweißprozess in die Schweißnaht **(504)** eingebrachten Eigenspannungen.

Die dargestellte Ausführungsform ermöglicht somit ein einfach durchführbares Verschweißen und resultiert in einer gegen hohe Drücke beständigen Schweißverbindung **(500),** ohne dass Schweißmaterial **(524)** in den gemeinsamen Zuführungskanal **(170)** gelangt.

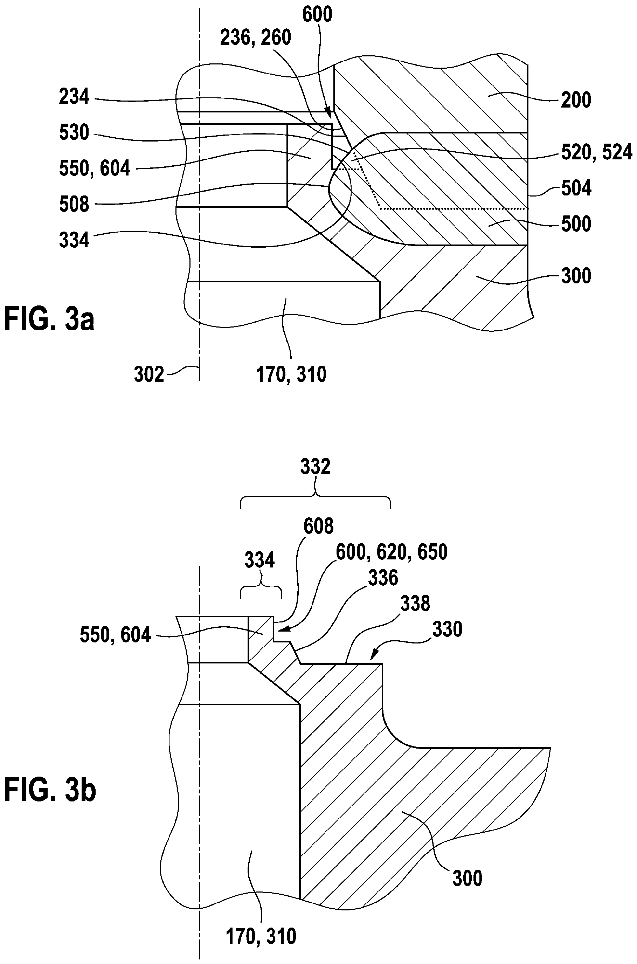

**Fig. 3a** zeigt eine Detailansicht der Umgebung der Schweißverbindung **(500)** aus **Fig. 2b**. Innerhalb des Bereichs des zur Schweißnaht **(504)** erstarrten Schweißbades **(520)** ist punktiert die vor dem Schweißprozess vorliegende Anlagefläche der ersten dem Sensorträger **(200)** zugewandten Fläche **(332)** des Stutzenteils und der zweiten dem Stutzenteil **(300)** zugewandten Fläche **(232)** des Sensorträgers dargestellt. Am zweiten Kegelflächenabschnitt **(236)** des Sensorträgers **(200)** ist die Fase **(260)** gezeigt, deren Form so ausgeführt ist, dass der erste Kegelflächenabschnitt **(336)** des Stutzenteils **(300)** an dem zweiten Kegelflächenabschnitt **(236)** des Sensorträgers **(200)** vor dem Verschweißen flächig zur Anlage gelangt. Das beim Verschweißen in die Ausnehmung **(600)** des ersten Kegelflächenabschnitts **(336)** eindringende Schweißmaterial **(524)** des Schweißbades **(520)** bildet nach seinem Erstarren einen Boden **(530)** aus, wobei die Aufnahmezone **(600)** nunmehr vom zweiten Kegelflächenabschnitt **(236)** am Sensorträger **(200),** dem Boden **(530)** und dem ersten Flächenabschnitt **(334)** am Stutzenteil begrenzt wird. Der erste Flächenabschnitt **(334)** des Stutzenteils **(300)** bildet nunmehr eine der Aufnahmezone **(600)** zugewandte Innenwandfläche **(608)** des Kragens **(604)** aus.

In **Fig. 3b** ist ein Querschnitt eines Ausschnitts eines Ausführungsbeispiels des Stutzenteils **(300)** der Erfindung dargestellt, in dem die in den ersten Kegelflächenabschnitt **(336)** eingebrachten Ausnehmung **(620)** einen L-förmigen **(650)** Querschnitt aufweist.

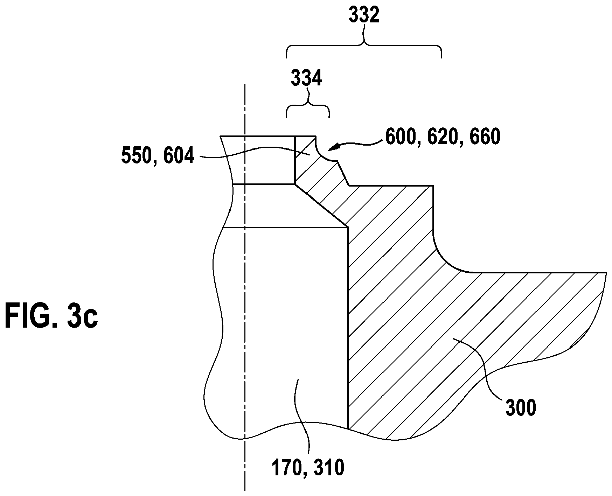

In **Fig. 3c** ist ein Querschnitt eines Ausschnitts eines weiteren Ausführungsbeispiels des Stutzenteils **(300)** der Erfindung dargestellt, in dem die in den ersten Kegelflächenabschnitt **(336)** eingebrachten Ausnehmung **(620)** einen C-förmigen **(660)** Querschnitt aufweist.

Alternativ ist es auch möglich, den Kragen (604) an dem Sensorträger (200) auszubilden und die Fase an dem Stutzenteil (300) und die Sensoranordnung (130) mit in Bezug auf die Gravitationsausrichtung unten liegendem Sensorträger (200) zu verschweißen.

## Patentansprüche

1. Verfahren zur Herstellung einer Vorrichtung zur Erfassung wenigstens einer Eigenschaft eines fluiden Mediums mit einer Sensoranordnung **(130),** wobei das Verfahren folgende Schritte umfasst:
-- Bereitstellung eines Sensorträgers **(200)** mit einem daran angeordneten Sensorelement **(150)** und mit einem in einer axialen Richtung **(z)** verlaufenden sacklochartigen Kanal **(210),**
-- Bereitstellung eines einen Durchgangskanal **(310)** aufweisenden Stutzenteils **(300),**
-- Aufsetzen des Sensorträgers **(200)** auf das Stutzenteil **(300)** derart, dass der sacklochartige Kanal **(210)** des Sensorträgers **(200)** mit dem Durchgangskanal **(310)** des Stutzenteils **(300)** einen Zuführungskanal **(170)** ausbildet,
-- Verbinden einer dem Sensorträger **(200)** zugewandten ersten Fläche **(332)** des Stutzenteils **(300)** mit einer dem Stutzenteil **(300)** zugewandten zweiten Fläche **(232)** des Sensorträgers **(200)** mittels einer den Zuführungskanal **(170)** umlaufenden Schweißnaht **(504),** wobei
nach dem Aufsetzen des Sensorträgers **(200)** auf das Stutzenteil **(300)** ein an den Zuführungskanal **(170)** angrenzender erster Flächenabschnitt **(334)** der ersten Fläche **(332)** des Stutzenteils **(300)** von einem an den Zuführungskanal **(170)** angrenzenden zweiten Flächenabschnitt **(234)** der zweiten Fläche **(232)** des Sensorträgers **(200)** derart beabstandet ist, dass zwischen dem ersten Flächenabschnitt **(334)** und dem zweiten Flächenabschnitt **(234)** eine an den Zuführungskanal **(170)** angrenzende und den Zuführungskanal **(170)** wenigstens teilweise umlaufende Aufnahmezone **(600)** ausgebildet ist, die in einer radial nach innen zum Zuführungskanal **(170)** hin verlaufenden Richtung durch einen Kragen **(604)** begrenzt wird, wobei die Aufnahmezone **(600)** zur Aufnahme von Schweißmaterial **(524)** vorgesehen ist, welches sich bei dem Verfahrenschritt des Verbindens mittels der umlaufenden Schweißnaht **(504)** bildet, wobei das Stutzenteil **(300)** vor dem Schritt des Verbindens mittels der Schweißnaht **(504)** an der ersten Fläche **(332)** einen ersten kreisringförmigen Flächenabschnitt **(338)** aufweist, an dessen in Richtung des Durchgangskanals **(310)** liegenden radialen Ende ein von dem ersten kreisringförmigen Flächenabschnitt **(338)** vorspringender und den Durchgangskanal **(310)** umlaufender Kragen **(604)** mit einem ersten Kegelflächenabschnitt **(336)** angeordnet ist, wobei in den ersten Kegelflächenabschnitt **(336)** eine umlaufende Ausnehmung **(620)** eingebracht ist, die als Aufnahmezone (600) für Schweißmaterial dient.

2. Verfahren nach Anspruch 1, **dadurch gekennzeichnet, dass** sich beim Verbinden mittels der Schweißnaht **(504)** eine Schweißwurzel **(508)** der Schweißnaht **(504)** am Boden **(530)** der Aufnahmezone **(600)** ausbildet.

3. Verfahren nach Anspruch 1, **dadurch gekennzeichnet, dass** die Projektion des ersten Kegelflächenabschnitts **(336)** in einer Richtung parallel zur axialen Richtung **(z)** auf eine senkrecht zu der axialen Richtung **(z)** verlaufende Ebene **(E)** eine erste Projektionsringfläche bildet und dass die Projektion der in den ersten Kegelflächenabschnitt **(336)** eingebrachten Ausnehmung **(620)** parallel zur axialen Richtung **(z)** auf die gleiche senkrecht zu der axialen Richtung **(z)** verlaufende Ebene **(E)** eine zweite Projektionsringfläche bildet, und dass das Verhältnis der radialen Breite **(B2)** der zweiten Projektionsringfläche zu der radialen Breite **(B1)** der ersten Projektionsringfläche größer als 0,25 und vorzugsweise größer als 0,5 ist.

4. Verfahren nach Anspruch 1, **dadurch gekennzeichnet, dass** der Sensorträger **(200)** vor dem Schritt des Verbindens mittels der Schweißnaht **(504)** an der zweiten Fläche **(232)** einen zweiten kreisringförmigen Flächenabschnitt **(238)** aufweist, an dessen in Richtung des sacklochartigen Kanals **(210)** liegenden radialen Ende eine Fase **(260)** mit einem den sacklochartigen Kanal **(210)** umlaufenden zweiten Kegelflächenabschnitt **(236)** vorgesehen ist.

5. Verfahren nach Anspruch 1 und 4, **dadurch gekennzeichnet, dass** bei dem Schritt des Aufsetzens des Sensorträgers **(200)** auf das Stutzenteil **(300)** der erste kreisringförmige Flächenabschnitt **(338)** des Stutzenteils **(300)** an dem zweiten kreisringförmigen Flächenabschnitt **(238)** des Sensorträgers **(200)** flächig zur Anlage gelangt und der erste Kegelflächenabschnitt **(336)** des Stutzenteils **(300)** an dem zweiten Kegelflächenabschnitt **(236)** des Sensorträgers **(200)** flächig zur Anlage gelangt, wobei zwischen der Grundfläche der in den ersten Kegelflächenabschnitt **(336)** eingebrachten Ausnehmung **(620)** und dem zweiten Kegelflächenabschnitt **(236)** des Sensorträgers **(200)** ein Abstand gegeben ist, durch den die Aufnahmezone **(600)** gebildet wird.

6. Verfahren nach Anspruch 5, **dadurch gekennzeichnet, dass** durch Verschweißen des ersten kreisringförmigen Flächenabschnitts **(338)** mit dem zweiten kreisringförmigen Flächenabschnitt **(238)** eine Schweißmaterial **(524)** enthaltende Schweißnaht **(504)** gebildet wird, wobei das Schweißmaterial **(524)** der Schweißnaht **(504)** zwischen dem ersten Kegelflächenabschnitt **(336)** des Stutzenteils **(300)** und dem zweiten Kegelflächenabschnitt **(236)** des Sensorträgers **(200)** maximal bis in die Aufnahmezone **(600)** vordringt und dort eine Schweißwurzel **(508)** ausbildet.

7. Verfahren nach Anspruch 1, **dadurch gekennzeichnet, dass** die in dem ersten Kegelflächenabschnitt **(336)** eingebrachte umlaufende Ausnehmung **(620)** einen L-förmigen **(650),** U-förmigen oder C-förmigen **(660)** Querschnitt aufweist.

## Claims

1. Method of manufacturing a device for detecting at least one property of a fluid medium with a sensor assembly **(130),** wherein the method comprises the following steps:
-- providing a sensor carrier **(200)** with a sensor element **(150)** arranged thereon and with a blind-hole-like channel **(210)** running in an axial direction **(z),**
-- providing a connecting part **(300)** having a through channel **(310),**
-- placing the sensor carrier **(200)** onto the connecting part **(300)** in such a manner that the blind-hole-like channel **(210)** of the sensor carrier **(200)** forms a supply channel **(170)** with the through channel **(310)** of the connecting part **(300),**
-- connecting a first surface **(332)** of the connecting part **(300),** which surface faces the sensor carrier **(200),** to a second surface **(232)** of the sensor carrier **(200),** which surface faces the connecting part **(300),** by means of a weld seam **(504)** encircling the supply channel **(170),** wherein
after the sensor carrier **(200)** is placed onto the connecting part **(300),** a first surface portion **(334)** of the first surface **(332)** of the connecting part **(300),** which surface portion is adjacent to the supply channel **(170),** is spaced apart from a second surface portion **(234)** of the second surface **(232)** of the sensor carrier **(200),** which surface portion is adjacent to the supply channel **(170),** in such a manner that a receiving zone **(600)** is formed between the first surface portion **(334)** and the second surface portion **(234),** said receiving zone being adjacent to the supply channel **(170)** and at least partially encircling the supply channel **(170)** and being bounded by a collar **(604)** in a direction running radially inwards towards the supply channel **(170),** wherein the receiving zone **(600)** is provided for receiving welding material **(524)** which is formed in the method step of connection by means of the encircling weld seam **(504),** wherein before the step of connection by means of the weld seam **(504),** the first surface **(332)** of the connecting part **(300)** has a first circular surface portion **(338),** on the radial end of which that lies in the direction of the through channel **(310)** a collar **(604)** which projects from the first circular surface portion **(338),** encircles the through channel **(310)** and has a first conical surface portion **(336)** is arranged, wherein an encircling recess **(620)** which serves as the receiving zone (600) for welding material is introduced into the first conical surface portion **(336).**

2. Method according to Claim 1, **characterized in that**, during the connection by means of the weld seam **(504),** a weld root **(508)** of the weld seam **(504)** is formed at the bottom **(530)** of the receiving zone **(600).**

3. Method according to Claim 1, **characterized in that** the projection of the first conical surface portion **(336)** in a direction parallel to the axial direction **(z)** onto a plane **(E)** running perpendicularly to the axial direction **(z)** forms a first projection ring area, and **in that** the projection of the recess **(620),** which is introduced into the first conical surface portion **(336),** parallel to the axial direction **(z)** onto the same plane **(E)** running perpendicularly to the axial direction **(z)** forms a second projection ring area, and **in that** the ratio of the radial width **(B2)** of the second projection ring area to the radial width **(B1)** of the first projection ring area is greater than 0.25 and preferably greater than 0.5.

4. Method according to Claim 1, **characterized in that**, before the step of connection by means of the weld seam **(504),** the second surface **(232)** of the sensor carrier **(200)** has a second circular surface portion **(238),** on the radial end of which that lies in the direction of the blind-hole-like channel **(210)** a bevel **(260)** with a second conical surface portion **(236)** encircling the blind-hole-like channel **(210)** is provided.

5. Method according to Claims 1 and 4, **characterized in that**, during the step of placing the sensor carrier **(200)** onto the connecting part **(300),** the first circular surface portion **(338)** of the connecting part **(300)** comes to bear flat against the second circular surface portion **(238)** of the sensor carrier **(200),** and the first conical surface portion **(336)** of the connecting part **(300)** comes to bear flat on the second conical surface portion **(236)** of the sensor carrier **(200),** wherein a distance is provided between the area of the recess **(620)** introduced into the first conical surface portion **(336)** and the second conical surface portion **(236)** of the sensor carrier **(200),** by means of which distance the receiving zone **(600)** is formed.

6. Method according to Claim 5, **characterized in that** by welding the first circular surface portion **(338)** to the second circular surface portion **(238)** a weld seam **(504)** containing welding material **(524)** is formed, wherein the welding material **(524)** of the weld seam **(504)** between the first conical surface portion **(336)** of the connecting part **(300)** and the second conical surface portion **(236)** of the sensor carrier **(200)** penetrates at maximum as far as into the receiving zone **(600)** and forms a weld root **(508)** there.

7. Method according to Claim 1, **characterized in that** the encircling recess **(602)** introduced in the first conical surface portion **(336)** has an L-shaped cross section **(650),** a U-shaped cross section or a C-shaped cross section **(660).**

## Revendications

1. Procédé de fabrication d'un dispositif destiné à détecter au moins une propriété d'un milieu fluide au moyen d'un ensemble de capteurs (130), dans lequel le procédé comprend les étapes suivantes :
- fournir un support de capteur (200) comportant un élément capteur (150) disposé sur celui-ci et un conduit en cul-de-sac (210) s'étendant dans une directions axiale (z),
- fournir une partie de manchon (300) comportant un conduit de passage (210),
- mettre en place le support de capteur (200) sur la partie de manchon (300) de manière à ce que le conduit en cul-de-sac (210) du support de capteur (200) forme un conduit d'admission (170) avec le conduit de passage (310) de la partie de manchon (300),
- relier une première surface (332) de la partie de manchon (300), qui est tournée vers le support de capteur (200), à une seconde surface (132) du support de capteur (200), qui est tournée vers la partie de manchon (300), au moyen d'une soudure (504) entourant le conduit d'admission (170),
dans lequel,
après la mise en place du support de capteur (200) sur la partie de manchon (300), un premier segment de surface (334) de la première surface (332) de la partie de manchon (300), adjacent au conduit d'admission (170), est espacé d'un second segment de surface (234) de la seconde surface (332) du support de capteur (200), de manière à former, entre le premier segment de surface (334) et le second segment de surface (234), une zone de réception (600) adjacente au conduit d'admission (170) et entourant au moins partiellement le conduit d'admission (170) adjacente au conduit d'admission (170), et à ce qu'elle soit délimitée dans une direction s'étendant radialement vers l'intérieur et vers le conduit d'admission (170) à travers une collerette (604), dans lequel la zone de réception (600) est prévue pour recevoir du matériau d'apport (524) qui se forme lors de l'étape de procédé consistant à effectuer une liaison au moyen de la soudure circonférentielle (504),
dans lequel la partie de manchon (300) présente, avant l'étape de liaison au moyen de la soudure (504), sur la première surface (332), un premier segment de surface en forme d'anneau circulaire (338) dont l'extrémité radiale s'étendant dans la direction du conduit de traversée (310) porte une collerette (604) comportant une première section de surface conique (336) faisant saillie par rapport au premier segment de surface en forme d'anneau circulaire (338) et entourant le conduit de traversée (310), dans lequel, dans le premier segment de surface conique (336), est ménagé un évidement circonférentiel (620) qui est utilisé en tant que zone de réception (600) de matériau d'apport.

2. Procédé selon la revendication 1, **caractérisé en ce qu'**une racine de soudage (508) de la soudure (504) se forme au fond (530) de la zone de réception (600) lors de la liaison effectuée au moyen de la soudure (504).

3. Procédé selon la revendication 1, **caractérisé en ce que** la projection du premier segment de surface conique (336) dans une direction parallèle à la direction axiale (z) forme une première surface annulaire de projection sur un plan (E) s'étendant perpendiculairement à la direction axiale (z) et **en ce que** la projection sur le même plan (E) s'étendant perpendiculairement à la direction axiale (z) du premier évidement (620) ménagé dans le premier segment de surface conique (336) parallèlement à la direction axiale (z), forme une seconde surface annulaire de projection, et **en ce que** le rapport entre la largeur radiale (B2) de la seconde surface annulaire de projection et la largeur radiale (B1) de la première surface annulaire de projection est supérieur à 0,25 et de préférence, est supérieur à 0,5.

4. Procédé selon la revendication 1, **caractérisé en ce que** le support de capteur (200) comporte, avant l'étape de liaison au moyen de la soudure (504), sur la seconde surface (232), un second segment de surface en forme d'anneau circulaire (238), dont l'extrémité radiale se situant dans la direction du conduit en cul-de-sac (210) présente un biseau (260) ayant une seconde surface conique (236) entourant le conduit en cul-de-sac (210).

5. Procédé selon les revendications 1 et 4, **caractérisé en ce que**, lors de l'étape de mise en place du support de capteur (200) sur la partie de manchon (300), le premier segment de surface en forme d'anneau circulaire (338) de la partie de manchon (300) vient en appui de manière plane sur le second segment de surface en forme d'anneau (238) du support de capteur (200) et le premier segment de surface conique (336) de la partie de manchon (300) vient en appui de manière plane sur le second segment de surface conique (236) du support de capteur (200), dans lequel, entre la surface de base de l'évidement (620) ménagé dans le premier segment de surface conique (336) et le second segment de surface conique (236) du support de capteur (200), une distance sur laquelle est formée la zone de réception (600) est établie.

6. Procédé selon la revendication 5, **caractérisé en ce qu'**une soudure (504) contenant du matériau d'apport (524) est formée par soudage du premier segment de surface en forme d'anneau circulaire (338) avec le second segment de surface en forme d'anneau circulaire (238), dans lequel le matériau d'apport (524) de la soudure (504) fait au maximum saillie jusque dans la zone de réception (600) entre le premier segment de surface conique (336) de la partie de manchon (300) et le second segment de surface conique (236) du support de capteur (200) et y forme une racine de soudure (508).

7. Procédé selon la revendication 1, **caractérisé en ce que** l'évidement (620) circonférentiel ménagé dans le premier segment de surface conique (336) présente une section transversale en L (650), en U ou en C (660).
